# EUROPÄISCHE PATENTSCHRIFT

(11) **EP 3 743 319 B1**
(45) Veröffentlichungstag und Bekanntmachung des Hinweises auf die Patenterteilung: **16.02.2022**
(21) Anmeldenummer: 18836357.6
(22) Anmeldetag: 19.12.2018
(51) Int. Cl.: B61D 27/00, B61D 37/00, B64D 11/04

(54) **GALLEY-KLIMAANLAGE**
GALLEY AIR CONDITIONING SYSTEM
CLIMATISEUR D'OFFICE

(30) Priorität: 25.01.2018 DE 102018201176
(43) Veröffentlichungstag der Anmeldung: 02.12.2020
(73) Patentinhaber: Siemens Mobility GmbH, 81739 München (DE)
(72) Erfinder: FROESE, Jürgen, 47807 Krefeld (DE); GÄRTNER, Ralph, 41379 Brüggen (DE); KEMMERLING, Frank, 41472 Neuss (DE); KOHNEN, Heinrich, 47906 Kempen (DE); NEUMANN, Birgit, 47239 Duisburg (DE)
(86) Internationale Anmeldenummer: PCT/EP2018/085733
(87) Internationale Veröffentlichungsnummer: WO 2019/145096

(56) Entgegenhaltungen:
- EP-A1- 3 202 634
- DE-U1-202014 104 787

## Beschreibung

Die vorliegende Erfindung betrifft eine Galley für ein Fahrzeug, wobei die Galley einen Anschluss für die thermische Anbindung der Galley an eine Fahrzeug-Klimaanlage des Fahrzeugs umfasst. Die Erfindung betrifft auch ein Fahrzeug, insbesondere ein Schienenfahrzeug, umfassend eine solche Galley.

Ein Schienenfahrzeug mit einer derartigen Galley ist beispielsweise aus EP 3 202 634 A1 bekannt.

Im Folgenden wird die Erfindung teilweise in Hinblick auf eine Galley eines Schienenfahrzeugs beschrieben, es ist jedoch auch vorstellbar die Erfindung in anderen Fahrzeugen mit einer Galley, wie beispielsweise in einem Flugzeug oder einem Schiff zu verwenden. Als Galley ist hier also insbesondere eine Bordküche eines Luft-, Schienen- oder Wasserfahrzeugs, wie eines Flugzeugs, Zugs oder Schiffs, zu verstehen.

Aufgrund der begrenzten Leistung von Fahrzeug-Klimaanlagen, insbesondere Fahrgast-Klimaanlagen in Schienenfahrzeugen, die auch die Galley mit Kaltluft versorgen und der innerhalb der Galley verbauten Wärmequellen (Ofen, Kaffeemaschine, etc.), heizt sich die Galley insbesondere im Sommer stark auf.

Über den Anschluss an die Fahrzeug-Klimaanlage wird üblicherweise warme Luft aus dem Bereich der Wärmequellen der Galley beispielsweise über eine Dunstabzugshaube abgesaugt und zu einem Fortluftgerät der Fahrzeug-Klimaanlage transportiert. Dort wird die Luft dann aus dem Schienenfahrzeug transportiert. Im Druckschutzfall, z. B. bei Tunneleinfahrten eines Schienenfahrzeugs, wird das Fortluftgerät jedoch abgeschaltet. Zudem reicht der Luftaustausch auch ohne diese Ausfallzeiten in der Regel für die Galley nicht aus, sodass sich in der Galley Temperaturen von über 30 °C einstellen können.

Gleichzeitig sind die räumlichen Ausmaße einer Galley eines Fahrzeugs begrenzt und es ist regelmäßig nicht wünschenswert, den freien Raum der Galley zu verringern, um beispielsweise eine eigenständige sekundäre Klimaanlage für die Galley vorzusehen. Weiterhin würde eine eigenständige sekundäre Klimaanlage für die Galley auch die Kosten der Galley deutlich erhöhen.

Die Aufgabe besteht daher darin, einer Galley eine bessere Klimatisierung zur Verfügung zu stellen, ohne den freien Raum der Galley deutlich zu verringern.

Erfindungsgemäß wird eine Galley für ein Fahrzeug der eingangs genannten Art zur Verfügung gestellt, welche einen Anschluss für die thermische Anbindung der Galley an eine Fahrzeug-Klimaanlage des Fahrzeugs sowie eine Galley-Kälteanlage zur Versorgung von lokalen Kühlstellen in der Galley umfasst. Die Galley umfasst ferner eine Galley-Klimaanlage, die von der Fahrzeug-Klimaanlage getrennt ist, wobei die Galley-Klimaanlage von der Galley-Kälteanlage mit Kühlmittel versorgt wird.

Die erfindungsgemäße Lösung hat den Vorteil, dass die Galley-Klimaanlage eine bessere Klimatisierung der Galley erlaubt, ohne dass eine eigenständige sekundäre Galley-Klimaanlage mit eigenständiger Kühlmittelversorgung notwendig ist, da das gekühlte Kühlmittel bereits von der Galley-Kälteanlage bereitgestellt wird. Bevorzugt ist die Galley-Klimaanlage als zusätzlicher Kühlkreislauf innerhalb der Galley realisiert beziehungsweise umfasst die Galley-Klimaanlage einen zusätzlichen Kühlkreislauf innerhalb der Galley.

Galleys verfügen häufig über eine Galley-Kälteanlage, um mehrere lokale Kühlstellen, zum Beispiel Kühlschränke oder Tiefkühlfächer zentral mit Kühlmittel zu versorgen. Dies spart Platz und erlaubt es, die Kühlstellen fest im Boden und/oder der Wand der Galley zu verbauen. Es wird also die Kühlkapazität der Galley-Kälteanlage mitverwendet, um die Galley-Klimaanlage zu betreiben. Die Galley-Klimaanlage nimmt daher weniger Platz in Anspruch und erhöht die Kosten der Galley weniger als eine eigenständige sekundäre Galley-Klimaanlage. Moderne Kühlstellen weisen eine so wirksame thermische Isolation auf, dass es üblicherweise nur notwendig ist, diese für einen Bruchteil der Betriebszeit aktiv zu kühlen. Weiterhin müssen auch meistens nicht alle Kühlstellen gleichzeitig mit Kühlmittel versorgt werden. Es steht also regelmäßig zumindest ein Teil der Kühlleistung der Galley-Kälteanlage ungenutzt zur Verfügung.

Die Temperatur innerhalb der Galley kann mit der erfindungsgemäßen Lösung reduziert werden, wodurch sich verbesserte Arbeitsbedingungen für das Galley Personal ergeben. Dazu wird die ohnehin für lokale Kühlstellen installierte beziehungsweise vorgesehene Kälteleistung verwendet.

Vorzugsweise umfasst die Galley-Klimaanlage eine Umluftkühlung. Um die Fahrzeug-Klimaanlage zu Unterstützen und damit die Temperatur innerhalb der Galley abzusenken, kann also ein zusätzlicher Kühlkreislauf, der als Umluftkühlung arbeitet, als Galley-Klimaanlage mit der bestehenden Galley-Kälteanlage verbunden werden.

In einer bevorzugten Ausführungsform umfasst die Umluftkühlung einen Luftkanal, sowie einen im Luftkanal angeordneten Wärmetauscher und einen im Luftkanal angeordneten Lüfter, wobei der Wärmetauscher über Kühlmittel-Leitungen mit der Galley-Kälteanlage verbunden ist. Bevorzugt kann die Umluftkühlung auch mehrere miteinander verbundene und/oder voneinander getrennte Luftkanäle umfassen, in welchen auch mehrere Lüfter vorgesehen sein können. In einer derartigen Ausführung kann warme Luft aus der Galley durch einen oder mehrere Luftkanäle zu einem Wärmetauscher, der von der Galley-Kälteanlage der Galley versorgt wird, geleitet und dort heruntergekühlt werden. Anschließend wird die gekühlte Luft wieder in die Galley eingeleitet. Der Luftstrom wird von dem Lüfter bzw. den Lüftern erzeugt. Der Wärmetauscher kann über Kühlmittel-Leitungen beziehungsweise über Kältemittelleitungen mit der Galley-Kälteanlage verbunden sein.

Vorzugsweise ist die Galley-Klimaanlage im Bereich des Unterbodens der Galley und/oder im Unterboden der Galley angeordnet. Ferner bevorzugt ist die Galley-Klimaanlage im Unterflurbereich der Galley angeordnet. Dies hat den Vorteil, dass die Galley-Klimaanlage den freien Raum der Galley nur wenig reduziert. Die Galley-Kälteanlage kann bei dieser Lösung auch im Unterboden der Galley angeordnet sein, so dass die aufgenommene Wärme aus dem Kältekreislauf in die Umgebung, insbesondere in eine Umgebung außerhalb des Fahrzeugs, abgegeben wird. Somit können die Transportwege für das Kühlmittel verkürzt werden, was Kosten und Platz spart und die Effizienz des Systems erhöht. Bevorzugt sind Teile der Galley-Klimaanlage, beispielsweise Teile eines Luftkanals, in einer Wand, einem Boden oder einer Decke der Galley angeordnet.

In einer bevorzugten Ausführungsform umfasst die Umluftkühlung an einem Ende des Luftkanals mindestens eine Warmluftansaugung in einem Boden und/oder in einer Wand und/oder in einer Decke der Galley und an einem anderen Ende des Luftkanals mindestens eine Kaltluftausblasung in einem Boden und/oder in einer Wand und/oder in einer Decke der Galley. Mit anderen Worten ausgedrückt umfasst die Umluftkühlung bevorzugt an einem Ende des Luftkanals mindestens eine Warmluftansaugeeinheit in einem Boden und/oder in einer Wand und/oder in einer Decke der Galley und an einem anderen Ende des Luftkanals mindestens eine Kaltluftausblaseeinheit in einem Boden und/oder in einer Wand und/oder in einer Decke der Galley. Bevorzugt ist die Warmluftansaugeeinheit und/oder die Kaltluftausblaseeinheit als Lüfter oder als Gebläse ausgeführt.

Da warme Luft nach oben steigt ist es regelmäßig bevorzugt und vorteilhaft, eine oder mehrere Warmluftansaugung(en) beziehungsweise eine oder mehrere Warmluftansaugeeinheit(en) in einer Wand und/oder in einer Decke der Galley anzuordnen. Gleichzeitig kann es von Vorteil sein und ist es regelmäßig bevorzugt, eine oder mehrere Kaltluftausblasung(en) beziehungsweise eine oder mehrere Kaltluftausblaseeinheit(en) in einem Boden der Galley anzuordnen.

In einer bevorzugten Ausführungsform sind mindestens eine Warmluftansaugung und mindestens eine Kaltluftausblasung räumlich, vorzugsweise um mindestens 1 Meter, getrennt voneinander in der Galley angeordnet. Um einen Luftkurzschluss zu vermeiden sind die Warmluftansaugung und die Kaltluftausblasung also räumlich voneinander getrennt. Die räumliche Trennung kann sowohl vertikal als auch horizontal erfolgen. Unter räumlicher Trennung ist hier beispielsweise das Vorliegen eines geometrischen Abstands zwischen Warmluftansaugung und Kaltluftausblasung zu verstehen. Bevorzugt ist die mindestens eine Warmluftansaugung als Warmluftansaugeeinheit realisiert. Ferner bevorzugt ist die mindestens eine Kaltluftausblasung als Kaltluftausblaseeinheit realisiert.

In einer bevorzugten Ausführungsform ist mindestens eine Warmluftansaugung in der Galley vertikal oberhalb mindestens einer Kaltluftausblasung angeordnet. Bevorzugt bezieht sich die vorhergehend gemachte Angabe "vertikal oberhalb" dabei auf eine vom Boden der Galley ausgehend gemessene Höhe der Galley, sodass der Abstand zwischen dem Boden der Galley und der mindestens einen Kaltluftausblasung in diesem Ausführungsbeispiel geringer ist als der Abstand zwischen dem Boden der Galley und der mindestens einen Warmluftansaugung. Da wärmere Luft nach oben steigt ist es regelmäßig bevorzugt und vorteilhaft, eine oder mehrere Warmluftansaugung(en) in der Galley vertikal oberhalb einer oder mehrerer Kaltluftausblasung(en) anzuordnen. Damit wird ein effizienterer Wärmeabtransport ermöglicht.

In einer bevorzugten Ausführungsform umfasst die Galley eine Steuereinheit für die Galley-Kälteanlage, die dazu eingerichtet ist, die Versorgung der lokalen Kühlstellen mit Kühlmittel durch die Galley-Kälteanlage gegenüber der Galley-Klimaanlage zu priorisieren. Priorität hat in dieser Ausführungsform die Versorgung der Kühlstellen. Diese Funktion wird in die Steuereinheit der Galley-Kälteanlage implementiert. Somit wird sichergestellt, dass die Kühlstellen nicht unterversorgt werden, wenn beispielsweise im Sommer die Galley-Klimaanlage häufig benötigt wird.

In einer bevorzugten Ausführungsform wird die Galley-Klimaanlage nur dann mit Kühlmittel versorgt, wenn gleichzeitig mindestens eine lokale Kühlstelle unter Teillast betrieben wird. Ferner bevorzugt ist die Steuereinheit der Galley dazu ausgebildet, die Versorgung der Galley-Klimaanlage mit Kühlmittel nur dann zu veranlassen beziehungsweise zu bewirken, wenn mindestens eine lokale Kühlstelle auf Teillast betrieben wird. Um zu verhindern, dass die Kühlstellen durch den zusätzlichen Kälteverbraucher unterversorgt werden, wird die Galley-Klimaanlage nur dann zugeschaltet, wenn keine oder nur eine reduzierte Kühlanforderung der Kühlstellen vorliegt. Alternativ oder zusätzlich wird die Galley-Klimaanlage nur dann zugeschaltet, wenn die Galley-Kälteanlage insgesamt im Teillastbetrieb ist. So ist es auch möglich, dass die Kühlleistung der Galley-Kälteanlage für die lokalen Kühlstellen leicht überdimensioniert ist und daher die Galley-Klimaanlage immer zumindest mit reduzierter Leistung betrieben werden kann. Es ist auch möglich, durch die Verwendung von sparsameren Kühlstellen eine zusätzliche Kapazität der Galley-Kälteanlage für die Galley-Klimaanlage bereitzustellen.

Die erfindungsgemäße Aufgabe wird auch durch ein Fahrzeug, insbesondere ein Schienenfahrzeug, gelöst, umfassend eine Galley nach einer der vorherigen Ausführungsformen, sowie eine mit der Galley verbundene Fahrzeugklimaanlage. Die Temperatur innerhalb der Galley des Fahrzeugs kann somit reduziert werden, wodurch sich verbesserte Arbeitsbedingungen für das Galley Personal ergeben. Dazu wird die ohnehin für lokale Kühlstellen der Galley installierte Kälteleistung verwendet und es ist keine Erhöhung der Leistung der Fahrzeug-Klimaanlage notwendig.

Bevorzugt ist der Anschluss an die Fahrzeug-Klimaanlage als Luftkanalanschluss realisiert. Ferner bevorzugt ist der Anschluss an die Fahrzeug-Klimaanlage lediglich als offener Bereich der Galley realisiert, über welchen ein Luftaustausch mit der in einem Fahrgastbereich befindlichen beziehungsweise gegebenen Luft ermöglicht wird.

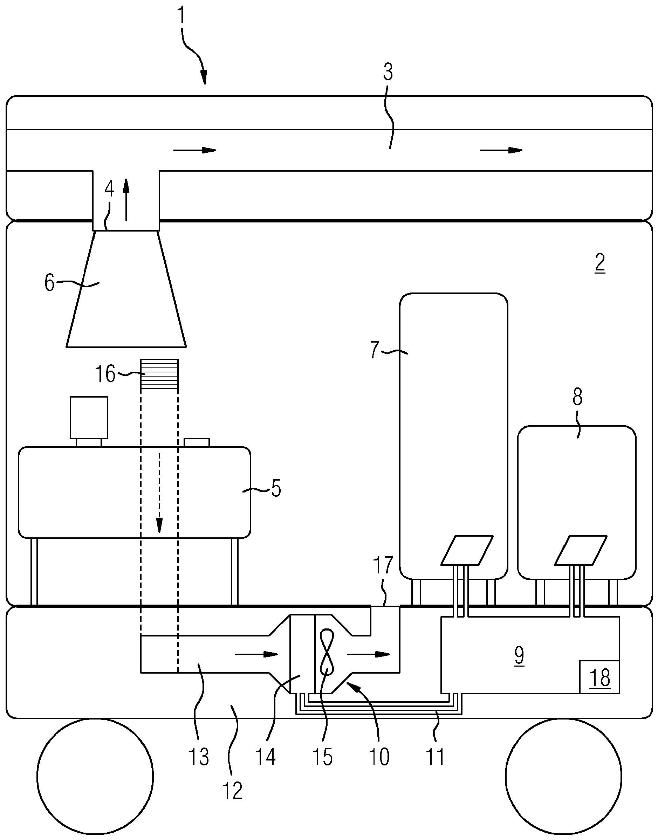

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit der Zeichnung näher erläutert werden. Es zeigt die einzige:
- Figur: einen schematischen Längsschnitt durch ein Ausführungsbeispiel eines erfindungsgemäßen Fahrzeugs, welches eine erfindungsgemäße Galley umfasst.

Die Figur zeigt ein erfindungsgemäßes Fahrzeug 1, hier ein Schienenfahrzeug, umfassend eine Galley 2. Die Galley 2 wird durch eine Fahrzeug-Klimaanlage 3 über einen Anschluss 4 mit Klimatisierung versorgt. Aufgrund der erhöhten Wärmeproduktion innerhalb der Galley 2, insbesondere durch Wärmequellen wie einem Herd 5, heizen sich Galleys des Standes der Technik insbesondere im Sommer stark auf.

Über den Anschluss 4 an die Fahrzeug-Klimaanlage 3 wird üblicherweise warme Luft aus dem Bereich der Wärmequellen der Galley 2 bspw. über eine Dunstabzugshaube 6 abgesaugt und zu einem Fortluftgerät der Fahrzeug-Klimaanlage 3 transportiert. Dort wird die Luft dann aus dem Fahrzeug 1 transportiert. Bei Galleys des Standes der Technik wird jedoch im Druckschutzfall, z. B. bei Tunneleinfahrten eines Schienenfahrzeugs, das Fortluftgerät abgeschaltet. Zudem reicht der Luftaustausch bei derartigen Galleys auch ohne diese Ausfallzeiten in der Regel für die Galley nicht aus, sodass in der Galley Temperaturen von über 30 °C erreicht werden.

Die in der Figur gezeigte erfindungsgemäße Galley 2 umfasst mehrere Kühlstellen 7, 8, die in diesem Ausführungsbeispiel rein beispielhaft als Kühlschrank 7 und als Kühlfach 8 ausgeführt sind. Die Kühlstellen 7, 8 werden über eine Galley-Kälteanlage 9 mit Kühlmittel versorgt.

Die erfindungsgemäße Galley 2 weist eine Galley-Klimaanlage 10 auf, die über Kühlmittel-Leitungen 11 von der Galley-Kälteanlage 9 mit Kühlmittel versorgt wird. Sowohl die Galley-Klimaanlage 10 als auch die Galley-Kälteanlage 9 sind in diesem Ausführungsbeispiel in einem Unterboden 12 der Galley 2 angeordnet. Sie können aber auch an einem anderen Ort innerhalb der Galley 2 verbaut sein.

Die Galley-Klimaanlange 10 umfasst eine Umluftkühlung. Die Umluftkühlung umfasst in diesem Ausführungsbeispiel rein beispielhaft einen Luftkanal 13, sowie einen im Luftkanal 13 angeordneten Wärmetauscher 14. Der Wärmetauscher 14 ist über die Kühlmittel-Leitungen 11 mit der Galley-Kälteanlage 9 verbunden.

Im Luftkanal 13 ist ein Lüfter 15 angeordnet. Warme Luft aus der Galley 2 wird über eine oder mehrere Warmluftansaugung(en) 16 durch den (hier teilweise gestrichelt dargestellten, da in der Wand der Galley 2 angeordneten) Luftkanal 13 zu dem Wärmetauscher 14 geleitet und dort heruntergekühlt. Anschließend wird die gekühlte Luft wieder durch den Luftkanal 13 und mindestens eine Kaltluftausblasung 17 in die Galley 2 eingeleitet. Der Luftstrom wird von dem Lüfter 15 erzeugt. Es können auch mehrere Luftkanäle, mehrere Lüfter und/oder mehrere Wärmetauscher vorgesehen sein.

Die Galley-Klimaanlage 10 kann aber auch mehrere Warmluftansaugungen 16 und/oder mehrere Kaltluftausblasungen 17 umfassen. Vorzugsweise sind die Warmluftansaugung(en) 16 und die Kaltluftausblasung(en)17 räumlich, vorzugsweise um mindestens 1 Meter, getrennt voneinander in der Galley 2 angeordnet. Dadurch kann ein Luftkurzschluss vermieden werden. Die Trennung kann sowohl vertikal als auch horizontal erfolgen. Vorzugsweise ist mindestens eine Warmluftansaugung 16 in der Galley 2 vertikal oberhalb mindestens einer Kaltluftausblasung 17 angeordnet (wie es in der vorliegenden Ausführungsform der Fall ist). Da warme Luft nach oben steigt, ist es regelmäßig vorteilhaft, eine oder mehrere Warmluftansaugung(en) 16 in der Galley 2 vertikal oberhalb einer oder mehrerer Kaltluftausblasung(en) 17 anzuordnen.

Die Galley-Kälteanlage 9 der Galley 2 umfasst in diesem Ausführungsbeispiel eine Steuereinheit 18 zur Steuerung der Versorgung der lokalen Kühlstellen 7, 8 und der Galley-Klimaanlage 10 mit Kühlmittel. Die Steuereinheit 18 ist dazu eingerichtet, die Versorgung der lokalen Kühlstellen 7, 8 mit Kühlmittel durch die Galley-Kälteanlage 9 gegenüber der Galley-Klimaanlage 10 zu priorisieren. Somit wird sichergestellt, dass die lokalen Kühlstellen 7, 8 nicht unterversorgt werden, wenn beispielsweise im Sommer die Galley-Klimaanlage 10 häufig benötigt wird.

In diesem Ausführungsbeispiel ist die Steuereinheit 18 beispielsweise dazu ausgebildet, die Galley-Klimaanlage 10 nur dann mit Kühlmittel zu versorgen, wenn gleichzeitig zumindest eine lokale Kühlstelle 7, 8 auf Teillast betrieben wird. Um zu verhindern, dass die lokalen Kühlstellen 7, 8 durch den zusätzlichen Kälteverbraucher unterversorgt werden, ist die Steuereinheit 18 ferner dazu ausgebildet, die Galley-Klimaanlage 10 nur dann zuzuschalten, wenn keine oder nur eine reduzierte Kühlanforderung der lokalen Kühlstellen 7, 8 vorliegt.

Alternativ oder zusätzlich wird die Galley-Klimaanlage 10 nur dann zugeschaltet, wenn die Galley-Kälteanlage 9 insgesamt im Teillastbetrieb ist. So ist es auch möglich, dass die Kühlleistung der Galley-Kälteanlage 9 für die lokalen Kühlstellen 7, 8 leicht überdimensioniert ist und daher die Galley-Klimaanlage 10 immer zumindest mit reduzierter Leistung betrieben werden kann. Es ist auch möglich durch die Verwendung einer sparsameren Kühlstelle 7, 8, zusätzliche Kapazität der Galley-Kälteanlage 9 für die Galley-Klimaanlage 10 freizulegen.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den durch die Ansprüche definierten Schutzumfang der Erfindung zu verlassen.

## Patentansprüche

1. Galley (2) für ein Fahrzeug (1), umfassend:
- einen Anschluss (4) für die thermische Anbindung der Galley (2) an eine Fahrzeug-Klimaanlage (3) des Fahrzeugs (1),
- eine Galley-Kälteanlage (9) zur Versorgung von lokalen Kühlstellen (7, 8) in der Galley (2),
- eine Galley-Klimaanlage (10), die von der Fahrzeug-Klimaanlage (3) getrennt ist,
**dadurch gekennzeichnet, dass** die Galley-Klimaanlage (10) von der Galley-Kälteanlage (9) mit Kühlmittel versorgt wird.

2. Galley (2) nach Anspruch 1, **dadurch gekennzeichnet, dass** die Galley-Klimaanlage (10) eine Umluftkühlung umfasst.

3. Galley (2) nach Anspruch 2, **dadurch gekennzeichnet, dass** die Umluftkühlung:
- einen Luftkanal (13),
- sowie einen im Luftkanal (13) angeordneten Wärmetauscher (14) und
- einen im Luftkanal (13) angeordneten Lüfter (15) umfasst,
wobei der Wärmetauscher (14) über Kühlmittel-Leitungen (11) mit der Galley-Kälteanlage (9) verbunden ist.

4. Galley (2) nach Anspruch 3, **dadurch gekennzeichnet, dass** die Umluftkühlung:
- an einem Ende des Luftkanals (13) mindestens eine Warmluftansaugung (16) in einem Boden und/oder in einer Wand und/oder in einer Decke der Galley (2) und
- an einem anderen Ende des Luftkanals (13) mindestens eine Kaltluftausblasung (17) in einem Boden und/oder in einer Wand und/oder in einer Decke der Galley (2) umfasst.

5. Galley (2) nach Anspruch 4, **dadurch gekennzeichnet, dass** mindestens eine Warmluftansaugung (16) und mindestens eine Kaltluftausblasung (17) räumlich, vorzugsweise um mindestens 1 Meter, getrennt voneinander in der Galley (2) angeordnet sind.

6. Galley (2) nach Anspruch 4 oder 5, **dadurch gekennzeichnet, dass** mindestens eine Warmluftansaugung (16) in der Galley (2) vertikal oberhalb mindestens einer Kaltluftausblasung (17) angeordnet ist.

7. Galley (2) nach einem der vorstehenden Ansprüche, **dadurch gekennzeichnet, dass** die Galley-Klimaanlage (10) im Bereich des Unterbodens (12) der Galley (2) und/oder im Unterboden (12) der Galley (2) angeordnet ist.

8. Galley (2) nach einem der vorstehenden Ansprüche, **dadurch gekennzeichnet, dass** die Galley (2) eine Steuereinheit (18) für die Galley-Kälteanlage (9) umfasst, die dazu eingerichtet ist, die Versorgung der lokalen Kühlstellen (7, 8) mit Kühlmittel durch die Galley-Kälteanlage (9) gegenüber der Galley-Klimaanlage (10) zu priorisieren.

9. Galley (2) nach Anspruch 8, **dadurch gekennzeichnet, dass** die Galley-Klimaanlage (10) nur dann mit Kühlmittel versorgt wird, wenn gleichzeitig mindestens eine lokale Kühlstelle (7, 8) unter Teillast betrieben wird.

10. Fahrzeug (1) umfassend eine Galley (2) nach einem der vorherigen Ansprüche, sowie eine mit der Galley (2) verbundene Fahrzeug-Klimaanlage (3).

## Claims

1. Galley (2) for a vehicle (1), comprising:
- a port (4) for the thermal connection of the galley (2) to a vehicle air-conditioning system (3) of the vehicle (1),
- a galley refrigeration system (9) for providing a supply to local cooling points (7, 8) in the galley (2),
- a galley air-conditioning system (10), which is separate from the vehicle air-conditioning system (3),
**characterized in that** coolant is supplied to the galley air-conditioning system (10) from the galley refrigeration system (9) .

2. Galley (2) according to Claim 1, **characterized in that** the galley air-conditioning system (10) comprises a circulating-air cooling arrangement.

3. Galley (2) according to Claim 2, **characterized in that** the circulating-air cooling arrangement comprises:
- an air channel (13),
- and also a heat exchanger (14) arranged in the air channel (13) and
- a fan (15) arranged in the air channel (13),
wherein the heat exchanger (14) is connected via coolant lines (11) to the galley refrigeration system (9).

4. Galley (2) according to Claim 3, **characterized in that** the circulating-air cooling arrangement comprises:
- at one end of the air channel (13) at least one warm-air intake means (16) in a floor and/or in a wall and/or in a ceiling of the galley (2)
and
- at another end of the air channel (13) at least one cold-air blowing-out means (17) in a floor and/or in a wall and/or in a ceiling of the galley (2).

5. Galley (2) according to Claim 4, **characterized in that** at least one warm-air intake means (16) and at least one cold-air blowing-out means (17) are arranged in the galley (2) separated from one another spatially, preferably by at least 1 metre.

6. Galley (2) according to Claim 4 or 5, **characterized in that** at least one warm-air intake means (16) is arranged in the galley (2) vertically above at least one cold-air blowing-out means (17).

7. Galley (2) according to one of the preceding claims, **characterized in that** the galley air-conditioning system (10) is arranged in the region of the sub-floor (12) of the galley (2) and/or in the sub-floor (12) of the galley (2).

8. Galley (2) according to one of the preceding claims, **characterized in that** the galley (2) comprises a control unit (18) for the galley refrigeration system (9), which control unit is configured to prioritize the supply of coolant by way of the galley refrigeration system (9) to the local cooling points (7, 8) over that to the galley air-conditioning system (10) .

9. Galley (2) according to Claim 8, **characterized in that** the galley air-conditioning system (10) is supplied with coolant only if at the same time part-load operation is being applied at at least one local cooling point (7, 8).

10. Vehicle (1) comprising a galley (2) according to one of the preceding claims and a vehicle air-conditioning system (3) which is connected to the galley (2).

## Revendications

1. Cambuse (2) d'un véhicule (1), comprenant :
- un raccord (4) de liaison thermique de la cambuse (2) à une installation (3) de conditionnement d'air du véhicule (1),
- une installation (9) frigorifique de cambuse pour l'alimentation de points (7, 8) locaux de refroidissement de la cambuse (2),
- une installation (10) de conditionnement d'air de la cambuse, qui est distincte de l'installation (3) de conditionnement d'air du véhicule,
**caractérisée en ce que** l'installation (10) de conditionnement d'air de la cambuse est alimentée en réfrigérant par l'installation (9) frigorifique de la cambuse.

2. Cambuse (2) suivant la revendication 1, **caractérisée en ce que** l'installation (10) de conditionnement d'air de la cambuse comprend un refroidissement à circulation d'air.

3. Cambuse (2) suivant la revendication 2, **caractérisée en ce que** le refroidissement à circulation d'air comprend :
- un conduit (13) pour de l'air,
- ainsi qu'un échangeur de chaleur (14) monté dans le conduit (13) pour de l'air et
- un ventilateur (15) monté dans le conduit (13) pour de l'air,
dans lequel l'échangeur de chaleur (14) communique avec l'installation (9) frigorifique de la cambuse par des conduits (11) pour du réfrigérant.

4. Cambuse (2) suivant la revendication 3, **caractérisée en ce que** le refroidissement à circulation d'air comprend :
- à un bout du conduit (13) pour de l'air, au moins une aspiration (16) d'air chaud dans un plancher et/ou dans une paroi et/ou dans un toit de la cambuse (2)
et
- à un autre bout du conduit (13) pour de l'air, au moins une sortie (17) d'air froid dans un plancher et/ou dans une paroi et/ou dans un plancher de la cambuse (2).

5. Cambuse (2) suivant la revendication 4, **caractérisée en ce qu'**au moins une aspiration (16) d'air chaud et au moins une sortie (17) d'air froid sont disposées dans la cambuse (2) en étant séparées dans l'espace l'une de l'autre, de préférence d'au moins un mètre.

6. Cambuse (2) suivant la revendication 4 ou 5, **caractérisée en ce qu'**au moins une aspiration (16) d'air chaud est disposé dans la cambuse (2) verticalement au-dessus d'au moins une sortie (17) d'air froid.

7. Cambuse (2) suivant l'une des revendications précédentes, **caractérisée en ce que** l'installation (10) de climatisation d'air de la cambuse (2) est disposée dans la région de sous-caisse (12) de la cambuse (2) et/ou dans la sous-caisse (12) de la cambuse (2).

8. Cambuse (2) suivant l'une des revendications précédentes, **caractérisée en ce que** la cambuse (2) comprend une unité (18) de commande de l'installation (9) frigorifique de la cambuse, qui est conçue pour donner à l'alimentation des points (7, 8) locaux de refroidissement en fluide de refroidissement par l'installation (9) frigorifique de la cambuse priorité sur l'installation (10) de conditionnement d'air de la cambuse.

9. Cambuse (2) suivant la revendication 8, **caractérisée en ce que** l'installation (10) de conditionnement d'air de la cambuse n'est alimentée en réfrigérant que si fonctionne en même temps sous charge partielle au moins un point (7, 8) local de refroidissement.

10. Véhicule (1) comprenant une cambuse (2) suivant l'une des revendications précédentes, ainsi qu'une installation (3) de conditionnement d'air de véhicule communiquant avec la cambuse (2).
